(19) Europäisches Patentamt
European Patent Office
Office européen des brevets

(11) EP 0 344 755 B2

(12) NEW EUROPEAN PATENT SPECIFICATION

(45) Date of publication and mention of the opposition decision:
**10.09.1997 Bulletin 1997/37**

(51) Int Cl.[6]: **C08F 4/02**, C08F 4/64, C08F 4/68

(45) Mention of the grant of the patent:
**02.02.1994 Bulletin 1994/05**

(21) Application number: **89109856.8**

(22) Date of filing: **31.05.1989**

# (54) Components and catalysts for the polymerization of olefins

Bestandteile und Katalysatoren für die Olefinpolymerisation

Composants et catalyseurs pour la polymérisation d'oléfines

(84) Designated Contracting States:
**BE DE FR GB IT NL**

(30) Priority: **31.05.1988 IT 2081188**

(43) Date of publication of application:
**06.12.1989 Bulletin 1989/49**

(73) Proprietor: **MONTELL NORTH AMERICA INC.**
**New Castle County Delaware (US)**

(72) Inventors:
- **Barbe, Pier Camillo**
  **I-44100 Ferrara (IT)**
- **Noristi, Luciano**
  **I-44100 Ferrara (IT)**
- **Pennini, Gianni**
  **I-44100 Ferrara (IT)**
- **Albizzati, Enrico**
  **I-28041 Arona Novara (IT)**

(74) Representative: **Zumstein, Fritz, Dr. et al**
**Patentanwälte,**
**Dr. F. Zumstein,**
**Dipl.-Ing. F. Klingseisen,**
**Bräuhausstrasse 4**
**80331 München (DE)**

(56) References cited:
**EP-A- 0 283 011** **GB-A- 2 028 347**
**GB-A- 2 036 761**

- **POLYMER SCIENCE USSR, vol. 28, no. 10, 1986, pages 2343-2350, Pergamon Journals Ltd, Oxford, GB; S.A. MKRTCHYAN et al.: "Formation and growth of polypropylene and polyethylene particles during the polymerization of olefins on deposited catalysts"**

Remarks:
The file contains technical information submitted after the application was filed and not included in this specification



Printed by Jouve, 75001 PARIS (FR)

## Description

This invention concerns catalyst components for the polymerisation of olefins supported on a porous polymeric medium, their method of preparation and their use in forming catalysts for the polymerization of olefins of formula $CH_2 = CHR$ where R is hydrogen, an alkyl radical with 1-6 C atoms, or an aryl radical, or mixtures of such olefins with or without dienes.

Catalyst components for the polymerization of olefins obtained by supporting a compound of a transition metal of Group IVB or VB of the Periodic System (for instance Ti or V) onto a porous polymer, such as a copolymer of styrene with divinylbenzene, are already known from GB-A-2036761 and from Polymer Science USSR, vol. 28, No. 10, 1986, pages 2343-2350 (Pergamon Journals Ltd., Oxford, GB).

There are known catalyst components for the polymerization of olefin containing a magnesium dihalide and a Ti compound supported on a porous medium containing inorganic oxides, such as silica, aluminia, magnesium oxide and others. For example GB-A-2028347 discloses catalyst components for the polymerization of olefins obtained by supporting $MgCl_2$ and a compound of a metal of Group IVB or VB of the Periodic System (for instance Ti) onto inorganic supports such as silica or alumina, or organic supports, such as styrene-divinylbenzene resins.

Such catalyst components are generally obtained by impregnating the porous support medium with a solution of a magnesium compound capable of being transformed into magnesium halide or dihalide by reaction with a halogenating agent, evaporating then the solvent, and treating the solid thus obtained with a titanium compound.

The resulting catalyts are characterized by elevated activity (expressed in polymer grams per grams of catalyst component); the polymers that are obtained this way, however, do not present satisfactory morphologic properties: specifically, the bulk density does not reach satisfactory values.

In the patent literature the possibility of supporting the titanium and magnesium compounds on polymeric support mediums is mentioned. However, the support referred to is essentially non porous, obtained, for example, by grinding polyethylene or polypropylene and similar polymers.

In the latest industrial production processes for polymerizing olefins there is a need for high performance catalysts, capable of producing polymers in the form of particles which have a controlled morphology and high bulk density.

Catalysts which are capable of producing good performance polymer in the form of flowing particles and high apparent density are known. Such catalysts are obtained by spraying, using spray-drying techniques, solutions of magnesium compounds capable of being transformed into magnesium dihalide, and subsequently reacting the solid spherical particles thus obtained with titanium tetrachloride.

According to other methods of impregnation, melted adducts of magnesium dichloride with alcohols are emulsified in inert solvents, operating under temperature conditions which cause solidification of the melted adduct particles.

EP-A-0 283 011 (to be considered under Article 54(3) EPC) discloses a solid catalyst component for α-olefin polymerization containing as catalyst components at least titanium, magnesium and chlorine which are impregnated into an organic porous polymer carrier having a mean particle diameter of 5 to 1,000 μm and a pore volume of 0.1 ml/g or above at a pore radius of 100 to 5,000 Å, a catalyst system comprising at least said solid catalyst component (A) and an organoaluminium compound (B), as well as a process for producing α-olefin polymers using said catalyst system. The highest porosity of the catalyst components disclosed in this document is 0.75 $cm^3/g$.

All these methods present the inconvenience of being laborious and do not allow an adequate control of particle size distribution.

Now unexpectedly it has been found that it is possible to obtain catalysts, which are capable of producing polymers in the form of particles with controlled morphology and which have high bulk density, by supporting a titanium or vanadium compound, a magnesium halide and an electron-donor compound on a porous polymeric support having a porosity from 1 to 3 $cm^3/g$, and a pore distribution such that at least 70% of the pores have a radius from 150 to $350 \cdot 10^{-10}$ m (150 to 350 Å).

The surface area is generally from 30 to 1000 $m^2/g$ and preferably between 100 and 600 $m^2/g$. The polymeric support is preferably in the form of microspheroidal particles with a diameter of from 10 to 200 μm.

Any polymer which does not react with the catalytic components and/or the catalyst, and which can be obtained in particular form with the porosity and pore characteristics indicated above, may be used. It is preferable to use the partially cross-linked polymers used in the preparation of ion exchange resins. Such polymers are obtained from styrene monomers, such as styrene, ethylvinylbenzene, vinyltoluene and methylstryrene; ethylenically unsaturated monomers, such as acrylic and methacrylic acid esters, acryl and methacrylamide and from cross-linking monomers, such as divinylbenzene and divinyltoluene.

Methods of preparing the partially cross-linked copolymers are described in Polymer Science 5, 113-213 (1967), as well as in US-A-4,224,415.

Preferred polymers are partially cross-linked styrene-divinylbenzene copolymers.

Other examples of useful polymers are partially cross-linked acrylonitrile-divinylbenzene copolymers. partially cross-linked polyacrylates, and the poly-2,6-diphenol-p-phenyloxide.

The preferred catalytic components include, as the Ti or V compound, a halide or haloalkoxide, as well as a magnesium halide.

An electron donor compound is also present whenever the components are used to form catalysts for the stereoregular polymerization of olefins having the formula $CH_2 = CHR$, where R is an alkyl radical with 1-6 C atoms, or an aryl radical.

The preparation of catalyst components comprising a titanium compound and magnesium dihalide is carried out by suspending the polymeric support medium in a solution of a magnesium dihalide or a magnesium compound capable of being transformed into a magnesium dihalide, and subsequently evaporating the solvent.

The solid particles thus obtained are then submitted to known transformation reactions of the magnesium compounds, or of magnesium dihalide complexes into anhydrous magnesium dihalide.

Usable magnesium compounds include Mg-alkyls or dialkyls, alkoxides, carboxylates and magnesium carbonates which are soluble in aliphatic or aromatic hydrocarbons.

The magnesium dihalides are usually dissolved in alcohols, ethers, ketones, or esters. Aqueous solutions of the magnesium dihalides may also be used. The hydrated magnesium halides are then transformed into anhydrous halides through known reactions such as, for instance, treatment with $TiCl_4$.

The magnesium compound is used at such concentration as to have, in the finished catalyst component, a magnesium content greater than 1% by weight, and preferably between 2 and 10% by weight.

Generally, solutions containing quantities of magnesium compound from 5 to 50% with respect to the polymeric support medium are used.

The operating temperature is generally from 0°C to 150°C. Compounds or complexes of magnesium which are preferred are the following: $MgCl_2 \cdot 2\ Ti(OC_4H_9)_4$, $MgCl_2 \cdot a\ nROH$, $MgR_2$, MgRCl, MgRBr, Mg-$(OR)_2$, Mg R (OR), Mg (OR)Br, Mg(OR)Cl, $Mg(OCOR)_2$ where R is an alkyl, cycloalkyl or aryl radical with 1-20 C atoms, and n is a number from 0.5 to 6.

As previously indicated, from the supports containing a megnesium compound transformable in anhydrous magnesium dihalide one can obtain the catalyst component of this invention through known reactions. Generally, when the magnesium compound present in the support is halogenated, it is treated with $TiCl_4$, or its solutions, in aliphatic or aromatic organic solvents, or in halogenated solvents, optionally in the presence of an electron-donor compound. In case of a nonhalogenated magnesium compound, the support is treated with a halogenating agent such as $SiCl_4$, chlorosilanes, $HSiCl_3$, Al-alkyl halides, and then, the magnesium dihalide obtained is reacted with a titanium or vanadium compound.

Reactions between adducts of magnesium dihalides and $TiCl_4$ are described in US-A-4,294,721. The magnesium dihalide which is obtained with the above mentioned reactions is present in the active form and is characterized by an X-ray spectrum where the most intense diffraction line which appears in the non-activated dihalide is substituted by a halo with a maximum intensity shifted with respect to the position of the most intense line, or such a reflection shows a broadening.

The catalyst components thus obtained generally present porosity characteristics inferior to those of the initial support mediums. In the components the porosity is greater than 1 $cm^3/g$ and the radius of the pores is such that at least 40% of the pores have a radius greater than $150 \cdot 10^{-10}$m (150 Å).

The titanium or vanadium compound is present in the support in quantities generally from 1 to 10% by weight.

The electron-donor components that are useful in this invention are those containing, in their molecule, oxygen, sulfur, phosphate or nitrogen atoms.

Particularly worth mentioning are esters of oxygenated acids, acids of halides, ketones, aldehydes, alcohols, ethers, thioethers, amides, lactones, phosphites, and phosphorous amides.

The esters are particularly chosen among the alkyl esters of mono and polycarboxylic aromatic acids. Examples of such esters are methyl, ethyl, butyl and octyl acetate, ethyl valerate, phenyl propionate, mono and diethyl succinate, ethyl, propyl and octyl benzoate, ethyl-p-toluate, ethyl-p-anisate, diisobutyl malonate, diethyl malonate, diisobutyl adipate, dioctyl sebacate; alkylmaleates, cycloalkyl and aryl maleates, alkyl and aryl pivalates, alkyl acrylates and methacylates, phthalates, such as diisobutyl, dioctyl, diphenylphthalate, benzyl-butylphthalate, and carbonates, such as diphenylcarbonate and ethylphenyl carbonate.

Among the ethers, those containing from 2 to 20 carbon atoms are suitable such as diethylether, dibutylether, diisoamylether, dioctylether, dioxane, trioxane, tetrahydrofuran and hindered ethers, such as methyl-cumylether.

Examples of other usable electron-donors are benzophenone, phosphites, such as triphenylphosphite, triphenylphosphines, benzoyl chloride, bromide and iodide, toluyl chloride, butyrolactone.

Silicon compounds can also be used if they contain at least one Si-OR bond where R is an alkyl, cycloalkyl or aryl radical containing 1-18C atoms, and etherocyclic compounds containing at least one nitrogen atom such as 2,2,5,5, tretramethylpiperidine, and 2,6 diisopropylpiperidine. Preferably the silicon compounds include at least one Si-OR bond where R is an alkyl radical with 1-8C atoms and at least one SiOR' bond where R' is an branched alkyl or cycloalkyl, with 3-18C atoms.

Examples of silicon compounds are: (ethyl)Si(OEt)$_3$, (phenyl)Si(OEt)$_3$, (propyl)Si(OEt)$_3$, (butyl)Si(OEt)$_3$, (isopropyl)Si(OEt)$_3$, (isobutyl)Si(OEt)$_3$, (sec-butyl)$_2$Si(OEt)$_3$, (tert.butyl)Si(OEt)$_3$, (tolyl)Si(OEt)$_3$, (cyclohexyl)Si (OEt)$_3$, (chlorophenyl)Si(OEt)$_3$, (chloroethyl)Si(OEt)$_3$, (trifluoropropyl)Si(OEt)$_3$,(neopentyl)Si(OEt)$_3$, (cyclohexyl)Si(OCH$_3$)$_3$, (decyl) Si(OCH$_3$)$_3$, (octyl)Si(OCH$_3$)$_3$, (phenyl)Si(OCH$_3$)$_3$, (ter-butyl)$_2$Si(OCH$_3$)$_2$, (cyclohexyl)$_2$Si- (OCH$_3$)$_2$, (tolyl)$_2$Si(OCH$_3$)$_2$, (isopropyl)$_2$Si(OCH$_3$)$_2$, (cyclohexyl)CH$_3$Si(OCH$_3$)$_2$, (tert-butyl)-CH$_3$Si(OCH$_3$)$_2$, (trifluoroprophyl)CH$_3$Si(OCH$_3$)$_2$, (isopropyl)CH$_3$Si(OCH$_3$)$_2$, (sec-butyl)CH$_3$Si(OCH$_3$)$_2$, n-butyl-(CH$_3$)Si(OCH$_3$)$_2$, n-octyl(CH$_3$)Si(OCH$_3$)$_2$, phenyl(CH$_3$)Si (OCH$_3$)$_2$, (sec-butyl)$_2$Si(OCH$_3$)$_2$, (trifluoropropyl)$_2$Si-(OCH$_3$)$_2$, (phenyl)ClSi(OCH$_3$)$_2$, (ethyl)Si-(isoC$_3$H$_7$)$_3$, ClSi(OEt)$_3$, CH$_2$ = CH-Si(OEt)$_3$, (phenyl)$_3$SiOCH$_3$, Si-(OCH$_3$)$_4$.

The preferred titanium or vanadium compounds include $TiCl_4$, $TiCl_3$, titanium halogen alkoxides, $VCl_4$, $VCl_3$ and vanadium acetyl acetone.

If the Ti of V compound is tetravalent, it is preferred to impregnate the support with a reducing agent solution, such as an $MgR_2$ or an Al-alkyl compound, eveporate the solvent and treat the solid thus obtained with a solution of the Ti or V compound.

Compounds, such as $TiCl_3$, may be dissolved in alcohols. The alcohol is subsequently separated from the support by known methods such as reaction with $TiCl_4$.

The catalyst components of the invention form, upon reaction with Al-alkyl compounds, catalysts useful in the polymerization of olefins having the formula $CH_2$ = CHR, where R is hydrogen, an alkyl radical with 1-6C, or an aryl radical and mixtures of said olefins with or without dienes.

The Al-alkyl compounds ar preferably Al-trialkyls, as for instance $AlEt_3$. Linear or cyclic alkyl compounds may also be used if the contain two or more Al atoms bonded to hetero-atoms, such as: $(C_2H_5)_2Al\text{-}O\text{-}Al(C_2H_5)_2$,

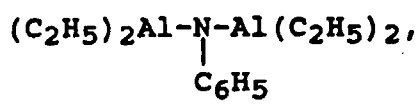

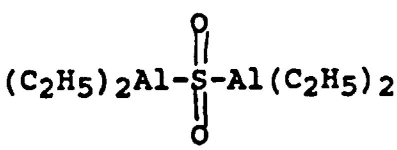

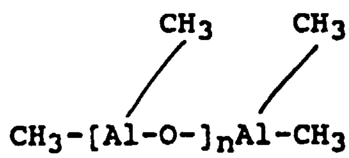

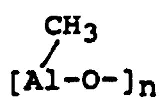

where n is a number from 1 to 20. $AlR_2OR'$ compounds may also be used, where R' is an aryl radical substituted in position 2 and/or 6, and R is an alkyl radical containing from 1 to 8 carbon atoms.

The Al-trialkyl compounds may be used in a mixture with Al-alkyl halides, such as $AlEt_2Cl$.

The polymerization of olefins is conducted using known methods, operating in a liquid phase formed, eventually, by the monomer, or in gas phase, or by a combination of liquid and gas polymerization stages. The polymerization temperature is usually from 0° to 150°C; usually between 60 and 90°C and takes place at atmospheric pressure or higher pressure.

The catalysts may be precontacted with small quantities of the olefin monomer (prepolymerization), to improve performances and above all improve the morphology of the polymers obtained.

Such prepolymerization is carried out by maintaining the catalyst suspended in an organic solvent, the quantity of polymer that is produced in this copolymerization stage is preferably from 5.0 to 3 times the weight of the quantity of catalyst used.

When the catalyst is used in the stereoregular polymerization of olefins having the formula $CH_2$ =CHR, where R is an alkyl radical with 1-6 C atoms or an aryl radical, it includes, in addition to an electron-donor compound supported on the solid component, an outside electron-donor compound, which is used in combination with an Al-alkyl compound. The outside donor is generally selected from those useful as internal donors.

These catalysts are particularly used in the stereoregular polymerization of propylene, or copolymerization of same

with smaller proportions of ethylene or other olefins.

In the case of the stereoregular polymerization of propylene and generally of olefins having the formula $CH_2=CHR$, where R is an alkyl radical with 1-6 C atoms, the catalyst component used includes as the internal donor, a compound selected from phthalic acid esters, such as hexyl or diisobutyl phthalates, and as outside donors, a silicon compound containing at least one SiOR or one SiOR' bond as already indicated.

The polymers obtained using the catalysts of this invention have a spherical form with a diameter that can be made to range from 100 to 3000 μm, depending on the catalytic component and the polymerization conditions used.

The following examples illustrate the invention, and not limit the scope of same.

The values of porosity and surface area reported in examples and referred to in the specification are determined according to B.E.T. method.

EXAMPLE 1 (no longer comprised by the claims)

A) Preparation of the support medium.

In a 2 liter reactor is introduced a suspending system formed by distilled water (450 ml), a suspending agent (ROAGIT S grade) in water solution at 5% brought to pH7 with NaOH (16.2 ml), a bleaching clay (PROLIT C10 grade) (2.25 g) and NaCl (0.45g).

The mixture is agitated at room temperature for 30 min., and then is introduced the monomer system prepared separately and consisting of 100 g styrene and 67.5 g divinylbenzene (50%) in toluene (225 ml) and n-octane (75 ml) containing 3 g benzoyl peroxide. The reaction mixture is polymerized, while being agitated at 400 rpm, for 10 hours at 80°C.

The spherical polymer obtained is separated by centrifuge and repeatedly washed with water. It is then dried and extracted fro 24 hours in Kumagava with acetone, subsequently, after drying, for 24 hours with ethanol and then, after further drying, with a heptane solution of $AlEt_3$ 1M.

It is then washed with heptane and vacuum dried.

The resulting copolymer has the form of microspheroidal particles with the following characteristics:

- surface area = 552 $m^2/g$;
- porosity 1.27 $cm^3/g$;
- 75% or the radius of the pore are from 150 to $350 \cdot 10^{-10}$m (150 to 350) Å).

B) Preparation of the catalyst component.

In a 1000 ml flask are introduced 4.3 g styrene-divinylbenzene resin prepared in A), a 35 ml heptane solution of the complex $MgCl_2 \cdot 2Ti(OC_4H_9)_4$ (equal to 18 milligram-atoms of Mg). It is maintained in rotavapor agitation while heating it to 70°C for 4 hours. At the end of this time a vacuum is created and the solvent removed. The solid obtained is suspended in 200 ml $TiCl_4$, containing 6 mM of diisobutylphthalate (DIBF). In 30 minutes the temperature is brought to 100°C and allowed to react at this temperature for 2 hrs. The $TiCl_4$ is removed by filtration at the reaction temperature and an equal quantity is added and allowed to react at 100°C for 2 hrs.

The solid is recovered by hot filtration (90°C). It is then washed at 90°C with n-heptane until the, chloride ions are removed. The solid is vacuum dried, and when analyzed gives the following composition by weight:

Mg = 5.16%; Ti = 2.35%; Cl = 20.9%; DIBF = 7.8%.

The characteristics of the polymer from the polymerization of propylene using the catalyst obtained from the component of this example is shown in the table below.

EXAMPLE 2 (no longer comprised by the claims)

In a 1000 ml flask are introduced 4.5 g of the copolymer of example 1, and 61 ml of ethanol solution of $MgCl_2$ at 5% by weight. This is agitated in a rotavapor while heating at 70°C for 4 hrs, after which a vacuum is created removing part of the ethanol until a molar ratio of $C_2H_5OH/Mg$ of 3 is obtained.

The solid is suspended in 200 ml of $TiCl_4$ containing 6 mM diisobutylphthalate (DIBF). Within 30 minutes the temperature is brought to 100°C and the reaction continued at this temperature for 2 hrs. The $TiCl_4$ is removed by filtration at the reaction temperature and an equal part of $TiCl_4$ is added, allowed to react at 100°C for 2 hrs.

The reaction mixture is filtered at 90°C and the solid is washed with n-heptane until all the chloride ions are removed.

The solid is vacuum dried, and when analyzed gives the following composition by weight:

Mg = 3.72%; Ti = 2.18%; Cl = 8.3%; DIBF = 2.8%.

The characteristics of the polymer from the polymerization of the propylene using the catalyst obtained from the component of this example is shown in the table below.

EXAMPLE 3 (no longer comprised by the claims)

In a 1000 flask are introduced 3 g of styrene/divinylbenzene resin of example 1, and 75 ml of a 0.2 M heptane solution of $Mg(hexyl)_2$.

This is agitated for 4 hrs at 70°C, after which the solvent is removed under a vacuum. To the solid thus obtained is added 100 ml $SiCl_4$ and the ingredients are refluxed for 5 hrs, filtered, and the solid washed with n-heptane and suspended in 200 ml $TiCl_4$ containing 1.2 mM diisobutylphthalate. The temperature is brought to 100°C and the reaction is continued for 2 hrs. At the end of this time the $TiCl_4$ is removed by filtration at 100°C and an equal quantity of $TiCl_4$ is added and allowed to react for 2 hrs at 100°C. The reaction mixture is then fiitered at 100°C and the solid is washed with n-heptane at 90°C until all chloride ions are removed. Upon analysis the solid gives the following composition by weight:

Ti = 2.76%; Mg = 3.54%; Cl = 18.7%; DIBF = 17.9%.

Characteristics of the polymer produced using the catalyst component of this example is shown in the table below.

EXAMPLE 4 (no longer comprised by the claims)

In a 1000 ml flask are introduced 3 g styrene/divinylbenzene resin of example 1, and 30 ml 0.5M hexane solution of Mg di(n-hexyl). These ingredients are agitated for 4 hrs at 50°C, and the solvent is removed under vacuum. To the solid thus obtained is added 30 ml of 1.5 M of $AlEt_2Cl$ solution. It is allowed to react for 4 hrs at 25°C, and filtered. The solid is washed with n-heptane and suspended in 200 ml of $TiCl_4$ containing 1.2 mM of diisobutylphthalate. The temperature is raised to 100°C and left to react for 2 hrs.

At the end of this time the $TiCl_4$ is removed by filtration at 90°C and an equal quantity of $TiCl_4$ is added and allowed to react at 100°C for 2 hrs.

The reaction mixture is filtered and the solid is washed with n-heptane at 90°C until all chloride ions are removed.

Upon analysis, the solid gives a content of:

Ti = 2.4%; Mg = 3.87%, Cl = 16.8% and DIBF = 14% by weight.

Characteristics of the polymer produced by using the catalyst component of this example is shown in the table below.

TABLE

| | CATALYST COMPONENT | | POLYMERIZATION | | | | |
|---|---|---|---|---|---|---|---|
| Ex. No. | mg | Pre-polymerization | Yield g polymer/ g catalyst component | Total isotacticity index = II % | $\eta$ (dl/g) | Bulk density (tamped) ($g/cm^3$) | Flowability sec. |
| 1 | 21 | | 1,840 | 95.3 | 1.20 | 0.40 | 18 |
| 1 | 18 | + | 3,700 | 96.9 | 1.20 | 0.41 | 17 |
| 2 | 22 | | 1,400 | 93.0 | 1.1 | 0.33 | 21 |
| 2 | 19 | + | 2,850 | 95.0 | 1.1 | 0.41 | 19 |
| 3 | 24 | | 1,500 | 91.8 | 1.0 | 0.39 | 20 |
| 4 | 25 | | 1,100 | 92.0 | 1.1 | 0.38 | 21 |

EXAMPLE 5 (no longer comprised by the claims)

In a 1000 ml flask are introduced 3.2 g of the resin of example 1, and 30 ml $MgCl_2 \cdot 2Ti(OC_4H_9)_4$ - (equal to 13.3 milligram-atoms of Mg) in a heptane solution. The ingredients are agitated in rotavapor at 70°C for 4 hrs. After this time, the solvent removed under vacuum.

The solid obtained is treated with 29 ml of polymethylhydrosiloxane (PMHS) equal to 43.2 milligram-atoms of H, in 20 ml n-heptane and 4.9 ml $SiCl_4$ for 2 hours at 60°C.

The solid is isolated by filtration and washed with n-heptane. The vacuum dried solid shows a titanium content of 8.27% by weight.

Propylene polymerization

In a 2 liter stainless steel autoclave is introduced at 50°C, in a propylene flow, a suitable quantity of the catalyst component, prepared according to examples 1-4 and suspended in 700 ml n-heptane containing 3.5 mM $Al(C_2H_5)_3$ and 0.175 mM phenyltrimethoxysilane. The autoclave is then closed, a pressure of 0.1 bar of $H_2$ is introduced, the total pressure is brought up to 7 bar, and the temperature to 70°C. The polymerization is continued for 2 hrs while the monomer is continuously fed into the autoclave.

Prepolymerization

In a 100 ml flask is suspended 1 g of the catalyst component prepared respectively according to examples 1 and 2 in 15 ml n-heptane; $Al(C_2H_5)_3$ and phenyltrimethoxysilane are added in the following ratio with respect to the titanium contained in the solid: Al/Ti = 10; Al/Si = 5.

While agitating at 20°C 1.2 g of gaseous propylene is added at 15 min. The suspension thus obtained is used in the polymerization the results of which are shown in the table below.

EXAMPLE 6 (no longer comprised by the claims)

In a stainless steel autoclave with a capacity of 2.5 liters, are introduced at 45°C, in a hydrogen flow, 1000 ml anhydrous hexane, 1.5 g $Al(iC_4H_9)_3$ and 20 mg of the catalyst of example 5.

The autoclave is closed and the temperature brought to 85°C. It is then pressurized with hydrogen up to 4.7 bar, and then with ethylene up to a total of 11 bar - (partial ethylene pressure 6.3 bar).

The reaction mixture is polymerized for 3 hrs while continuously feeding ethylene, maintaining constant temperature and pressure.

When the reaction is complete, the polymer is recovered by filtration and dried in furnace at 60°C for 8 hrs under a flow of nitrogen.

160 g polyethylene are obtained which have the following characteristics:

- Melt index E = 2.56 (g/10');
- Melt index F = 70.5 (g/10');
- Bulk density (pured) = 0.250 (kg/l);
- Bulk density (tamped) = 0.308 (kg/l).
- Melt indexes E and F are determined according to ASTM method D 1238 conditions E and F respectively.

EXAMPLE 7 (no longer comprised by the claims)

Polymerization of propylene is repeated using catalytic components supported on the styrene-divinylbenzene resins of example 1 as set forth in the table below.

The catalyst components have the following properties:

| Resin | Surface area $m^2/g$ | Porosity $cm^3/g$ | Pore radius from 150 to $350 \cdot 10^{-10}$m (150 to 350 Å) % |
|---|---|---|---|
| A | 60 | 0.3 | 35 |
| B | 80 | 0.45 | 40 |
| C | 450 | 0.7 | 50 |

The following polymerization results are obtained:

| Resin | Yield g PP/g cat. comp. | Isotacticity Index % | Bulk density (tamped) $g/cm^3$ |
|---|---|---|---|
| A | 1000 | 92 | 0.38 |
| B | 1300 | 94 | 0.40 |
| C | 1500 | 95 | 0.41 |

EXAMPLE 8 (no longer comprised by the claims)

A) Preparation of the catalyst component

2.66 g $Ti(OC_4H_9)_4$ are reacted with 0.33 g $MgCl_2$ at 135°C for 6 hrs. The product of the reaction is cooled to room temperature and diluted with 5 ml n-heptane and xylene mixture containing 4% xylene by volume. The mixture is then dropped over 60 minutes from a 15 ml microdistributor, with the thermostat at 50°C, in a 200 ml reactor charged with 20 g styrene-divinylbenzene resin having the following characteristics:

- surface area = 80 $m^2/g$ - porosity = 0.4 $cm^3/g$.

During the dropping, the resin is kept under gentle agitation. It is then cooled to 0°C and 3.5 g of a complex $MgCl_2 \cdot 6AlEtCl_2$ diluited in a 1/1 mixture of heptane and xylene. The mixture is kept under agitation for 60 minutes. The temperature is then raised to 60°C and the mixture is agitated for 2 hrs. The mixture is then cooled to room temperature and the solid is washed 6 times with 60 ml of anhydrous hexane each time.

The solution then dried under reduced pressure at 60°C. 24 g of a microspheroidal flowing product is obtaiend.

B) Copolymerization of ethylene and propylene.

In a 1.5 liter autoclave with a magnetic agitator, 1000 ml propylene are introduced, after de-aeration and clearing of the autoclave with propylene. The temperature is brought to 20°C. It is then saturated with ethylene up to 12.5 bar, and the catalyst complex (0.1833 g of the catalyst component prepared in A) and 1.58 g Al-triisobutyl) which has been prepared separately in 10 ml hexane and premixed for 5 minutes, is introduced with propylene gas pressure.

The mixture is polymerized for 1 hr, with continuous feeding ethylene while maintaining a constant pressure of 12.5 bar; the reaction is then interrupted by injecting into the autoclave 20 ml acetone.

The residual monomer are evaporated while agitating.

The copolymer is dried at 60°C under a nitrogen flow. 165 g of compact spheroidal particles polymers are obtained.

The yield is of 150,000 g/g Ti. The propylene content is 38.1% by weight. The crystallinity (polyethylene type) is 3%.

The properties of the polymers produced with the catalyst of this invention after vulcanization, are in line with those of the copolymers obtained with traditional catalysts obtained from with a vanadium compounds and Al-Alkyl halides.

**Claims**

**1.** A catalyst component for the polymerization of olefins, comprising a titanium or vanadium compound having at least one Ti-halogen or V-halogen bond, a magnesium dihalide and an electron-donor compound supported on a porous polymeric support, wherein the porosity of the component is greater than 1 $cm^3/g$ and the pore distribution is such that at least 40% of the pores have a radius greater than $150 \cdot 10^{-10}$m (150 Å).

**2.** The catalyst component of claim 1 having an X-ray spectrum where the most intense diffraction line of the magnesium dihalide is substituted by a halo having the maximum intensity shifted with respect to the position of the most intense diffraction line.

**3.** The catalyst component of claim 2 where the titanium or vanadium compound and magnesium dihalide are present in quantities, expressed as metal Ti, V and Mg, respectively, from 1 to 10% by weight.

**4.** The catalyst component of claim 1 wherein the electron-donor compound is selected from the group consisting of alkyl, aryl or cycloalkyl esters of mono and bicarboxylic aromatic acids.

**5.** The catalyst component of claim 4 wherein the ester is a phlhalic acid ester.

**6.** The catalyst component of claim 1 wherein the electron-donor compound is 2,2,5,5 tetramethylpiperidine.

**7.** The catalyst component of claim 1 wherein the electron-donor compound is a silicon compound containing at least one Si-OR bond where R is an alkyl radical with 1-6C atoms or at least one SiOR' bond where R' is a branched alkyl radical or cycloalkyl with 3-18C atoms.

**8.** A catalyst for the polymerization of olefins comprising the product obtained by reacting the catalyst component of claim 1 and an Al-alkyl compound.

9. The catalyst component of claim 1 wherein the porous support is a partially cross-linked styrene-divinylbenzene copolymer.

10. A process for the preparation of a catalyst component according to claim 1 comprising suspending a polymeric support, in the form of particles having a porosity from 1 to 3 $cm^3/g$, and a pore size distribution such that at least 70 per cent of the pores have a radius from 150 to 350 $\cdot 10^{-10}$ m (150 to 350 Å) in a solution of a magnesium dihalide or a magnesium compound capable of being transformed into a magnesium dihalide by reaction with halogenating agents, removing the solvent by evaporation and reacting the solid obtained with titanium or vanadium compounds.

11. The process of claim 10 wherein the magnesium compound solution contains a $MgCl_2 \cdot 2Ti(OC_4H_9)_4$ compound or a magnesium dichloride solution in an alcohol, and the solid obtained after the evaporation of the solvent is then reacted with $TiCl_4$.

12. A catalyst for the polymerization of olefins comprising the product of the reaction of a catalyst component of claim 1 comprising a titanium halide and an electron-donor compound with an Al-trialkyl compound.

13. The catalyst of claim 12 wherein an electron-donor compound is used together with the Al-trialkyl compound.

14. The catalyst of claim 13 wherein the electron-donor compound is a silane comprising at least one Si-OR bond where R is an alkyl radical with 1-8C atoms or one SiOR' bond where R' is an branched alkyl radical or cycloalkyl with 3-18C atoms.

15. Use of the catalyst according to anyone of claims 12 to 14 for the preparation of spherical olefin polymers.

**Patentansprüche**

1. Katalysatorkomponente für die Polymerisation von Olefinen, umfassend eine Titan- oder Vanadinverbindung mit zumindest einer Ti-Halogen- oder V-Halogen-Bindung, ein Magnesiumdihalogenid und eine Elektronendonorverbindung, aufgebracht auf einem porösen polymeren Träger, worin die Porosität der Komponente größer als 1 $cm^3/g$ ist, und die Porenverteilung derart ist, daß zumindest 40 % der Poren einen Radius von größer als $150 \cdot 10^{-10}$ m (150 Å) aufweisen.

2. Katalysatorkomponente gemäß Anspruch 1 mit einem Röntgenspektrum, worin die intensivste Beugungslinie des Magnesiumdihalogenids durch einen Halo ersetzt ist, bei dem die maximale Intensität im Hinblick auf die Lage der intensivsten Beugungslinie verschoben ist.

3. Katalysatorkomponente gemäß Anspruch 2, worin die Titan- oder Vanadinverbindung und das Magnesiumdihalogenid in Mengen, ausgedrückt als Metall Ti, V bzw. Mg, von 1 bis 10 Gew.-% vorhanden sind.

4. Katalysatorkomponente gemäß Anspruch 1, worin die Elektronendonorverbindung unter Alkyl-, Aryl- oder Cycloalkylestern von mono- und dicarboxylischen aromatischen Säuren ausgewählt ist.

5. Katalysatorkomponente gemäß Anspruch 4, worin der Ester ein Phthalsäureester ist.

6. Katalysatorkomponente gemäß Anspruch 1, worin die Elektronendonorverbindung 2,2,5,5-Tetramethylpiperidin ist.

7. Katalysatorkomponente gemäß Anspruch 1, worin die Elektronendonorverbindung eine Siliciumverbindung ist, die zumindest eine Si-OR-Bindung, worin R für einen Alkylrest mit 1 bis 6 C-Atomen steht, oder zumindest eine SiOR'-Bindung, worin R' für einen verzweigten Alkylrest oder Cycloalkyl mit 3 bis 18 C-Atomen steht, enthält.

8. Katalysator für die Polymerisation von Olefinen, umfassend das Produkt, erhalten durch Umsetzung der Katalysatorkomponente gemäß Anspruch 1 und einer Al-Alkylverbindung.

9. Katalysatorkomponente gemäß Anspruch 1, worin der poröse Träger ein teilweise vernetztes Styrol-Divinylbenzol-Copolymeres ist.

10. Verfahren zur Herstellung einer Katalysatorkomponente gemäß Anspruch 1, umfassend das Suspendieren eines polymeren Trägers in Form von Teilchen mit einer Porosität von 1 bis 3 $cm^3/g$ und einer derartigen Porengrößenverteilung, daß zumindest 70 % der Poren einen Radius von 150 bis $350 \cdot 10^{-10}$m (150 bis 350 Å) besitzen, in einer Lösung eines Magnesiumdihalogenids oder einer Magnesiumverbindung, welche befähigt ist, in ein Magnesiumdihalogenid durch Umsetzung mit Halogenierungsmitteln übergeführt zu werden, die Entfernung des Lösungsmittels durch Verdampfen und die Umsetzung des erhaltenen Feststoffs mit Titan- oder Vanadinverbindungen.

11. Verfahren gemäß Anspruch 10, worin die Lösung der Magnesiumverbindung eine $MgCl_2 \cdot 2Ti(OC_4H_9)_4$-Verbindung oder eine Magnesiumdichloridlösung in einem Alkohol enthält, und der nach Verdampfen des Lösungsmittels erhaltene Feststoff anschließend mit $TiCl_4$ umgesetzt wird.

12. Katalysator für die Polymerisation von Olefinen, umfassend das Reaktionsprodukt einer Katalysatorkomponente gemäß Anspruch 1, umfassend ein Titanhalogenid und eine Elektronendonorverbindung, mit einer Al-Trialkyl-Verbindung.

13. Katalysator gemäß Anspruch 12, worin eine Elektronendonorverbindung zusammen mit der Al-Trialkyl-Verbindung verwendet wird.

14. Katalysator gemäß Anspruch 13, worin die Elektronendonorverbindung ein Silan ist, das zumindest eine Si-OR-Bindung, worin R für einen Alkylrest mit 1 bis 8 C-Atomen steht, oder eine SiOR'-Bindung, worin R' ein verzweigter Alkylrest oder Cycloalkyl mit 3 bis 18 C-Atomen ist, enthält.

15. Verwendung des Katalysators gemäß einem der Ansprüche 12 bis 14 zur Herstellung von sphärischen Olefinpolymeren.

**Revendications**

1. Un composant catalytique pour la polymérisation d'oléfines comprenant un dérivé de titane ou de vanadium comportant au moins une liaison Ti-halogène ou V-halogène, un dihalogénure de magnésium et un dérivé donneur d'électron supporté sur un support polymère poreux, caractérisé en ce que la porosité du composant catalytique est supérieure à 1 $cm^3/g$ et la distribution des pores est telle que au moins 40% des pores ont un rayon supérieur à $150.10^{-10}$m (150 Å).

2. Le composant catalytique selon la revendication 1 présentant un spectre de diffraction aux rayons X dans lequel le pic de diffraction le plus intense dudit halogénure de magnésium est substitué par un halo présentant un déplacement de l'intensité maximale par rapport à la position du pic de diffraction le plus intense.

3. Le composant catalytique selon la revendication 2 dans lequel le dérivé de titane ou de vanadium et ledit halogénure de magnésium sont présents en des quantités qui, exprimées sous la forme de Mg, V et Ti métalliques, sont respectivement de 1 à 10% en poids.

4. Le composant catalytique selon la revendication 1, caractérisé en ce que le dérivé donneur d'électrons est sélectionné dans le groupe consistant en alkyl-, aryl- ou cycloalkylesters d'acides mono- et dicarboxyliques aromatiques.

5. Le composant catalytique selon la revendication 4, caractérisé en ce que l'ester correspond à l'ester d'acide phtalique.

6. Le composant catalytique selon la revendication 1, caractérisé en ce que le dérivé donneur d'électrons est la 2,2,5,5-tétraméthylpiperidine.

7. Le composant catalytique selon la revendication 1, caractérisé en ce que le dérivé donneur d'électrons est un dérivé de silicium contenant au moins une liaison Si-OR dans laquelle R représente un radical alkyle comportant de 1 à 6 atomes de carbone, ou au moins une liaison SiOR' dans laquelle R' représente un radical cycloalkyle ou alkyl ramifié comportant de 3 à 18 atomes de carbone.

8. Un catalyseur utilisé pour la polymérisation des oléfines comprenant le produit obtenu par réaction du composant catalytique selon la revendication 1 et un dérivé Al-alkyl.

**9.** Le composant catalytique selon la revendication 1, caractérisé en ce que le support poreux correspond à un copolymère ou divinyl benzène partiellement réticulé.

**10.** Un procédé de préparation d'un composant catalytique selon la revendication 1, comprenant la mise en suspension du support polymère sous la forme de particules présentant une porosité comprise entre 1 et 3 cm3/g et une distribution de la dimension des pores telle que au moins 70% d'entre eux présentent un rayon compris entre à 150 et $350.10^{-10}$ (150 à 350 Å), dans une solution d'un dihalogénure de magnésium ou d'un dérivé de magnésium capable d'être transformé en un dihalogénure de magnésium par réaction avec des agents d'halogénation, élimination du solvant par évaporation et réaction du solide obtenu avec des dérivés de titane ou de vanadium.

**11.** Le procédé selon la revendication 10, caractérisé en ce que la solution du dérivé de magnésium contient un dérivé $MgCl_2.2Ti(OC_4H_9)_4$ ou une solution de dichlorure de magnésium dans un alcool et en ce que le solide obtenu après évaporation du solvant réagit alors avec $TiCl_4$.

**12.** Un catalyseur utilisé pour la polymérisation des oléfines comprenant le produit de la réaction d'un composant catalytique selon la revendication 1, comprenant un halogénure de titane et un dérivé donneur d'électrons avec un dérivé Al-trialkyl.

**13.** Le catalyseur selon la revendication 12, caractérisé en ce que le dérivé donneur d'électrons est utilisé en même temps que le dérivé Al-trialkyl.

**14.** Le catalyseur selon la revendication 13, caractérisé en ce que le dérivé donneur d'électrons est un silane comprenant au moins une liaison Si-OR, dans laquelle R représente un radical alkyle comportant de 1 à 8 atomes de carbone ou une liaison SiOR' dans laquelle R' représente un radical cycloalkyle ou alkyl ramifié comportant de 3 à 18 atomes de carbone.

**15.** L'utilisation d'un catalyseur selon l'une quelconque des revendications 12 à 14 dans la préparation de polymères oléfiniques sphériques.